# EUROPÄISCHE PATENTSCHRIFT

(11) **EP 0 888 253 B1**
(45) Veröffentlichungstag und Bekanntmachung des Hinweises auf die Patenterteilung: **31.01.2001**
(21) Anmeldenummer: 97914104.1
(22) Anmeldetag: 27.01.1997
(51) Int. Cl.: C02F 3/12, C02F 3/30, B01D 21/02

(54) **BIOLOGISCHE KLEINKLÄRANLAGE**
SMALL-SCALE BIOLOGICAL SEWAGE TREATMENT PLANT
INSTALLATION D'EPURATION BIOLOGIQUE DE TAILLE REDUITE

(30) Priorität: 30.01.1996 DE 29601358 U; 02.07.1996 DE 19626592
(43) Veröffentlichungstag der Anmeldung: 07.01.1999
(73) Patentinhaber: E.V.U. Entwicklung von Umwelttechnik GmbH, 01277 Dresden (DE)
(72) Erfinder: KOCH, Reinhard, D-01609 Gröditz (DE); PEUKERT, Volkmar, D-01307 Dresden (DE)
(74) Vertreter: Hofmann, Klaus
(86) Internationale Anmeldenummer: DE9700189
(87) Internationale Veröffentlichungsnummer: WO9728093

(56) Entgegenhaltungen:
- WO-A-95/17351
- DE-A- 19 546 921
- US-A- 4 421 648

## Beschreibung

Die Erfindung betrifft eine biologische Kleinkläranlage für eine Wirbelbett/Biofilmtechnologie zur Abwasserbehandlung.

Nach dem Stand der Abwassertechnik sind Reinigungsleistung und Prozeßstabilität von Kleinkläranlagen unzureichend.

Hauptursachen dafür sind:
- schwankende und meist geringe Biomassekonzentrationen
- Instabilität der Biomasse
- der Austrag von Biomasse bei hydraulischen Stößen
- die instabile Rückführung von Biomasse aus der Nachkläreinrichtung in die Biostufe
- das unzureichende Puffervermögen bei Belastungsspitzen
- Austrag von Biomasse und somit Leistungsabfall bei Unterbelastungen und Mangelerscheinungen
- Ph-Absenkung durch Nitrifikation, dadurch Hemmung der biologischen Abbauprozesse.

Um Reinigungsleistung und Prozeßstabilität zu verbessern wird beispielsweise die Biostufe kleiner Kläranlagen mit Festbettpaketen zur Ansiedelung von Mikroorganismen ausgerüstet. Diese Organismen werden auch bei hydraulischen Stößen nicht ausgetragen. Nachteile dieser Technologie sind:
- Die besiedelbare Oberfläche der Festbetten ist mit 100 bis 150 m² pro m³ Biostufe relativ niedrig. Die Reinigungsleistung bzw. die Belastbarkeit pro m³ Beckenvolumen daher gering.
- Die Flächen der Festbetten bewachsen meist mit einer relativ dicken Biomasseschicht. Da nur die oberste Lamelle des Biofilms ausreichend mit Sauerstoff und Nährsubstrate versorgt wird, ist die Bioaktivität eingeschränkt.
- Im Innern der Aufwuchsschicht kommt es zu Faulprozessen die sich durch Absterben von Organismen ebenfalls nachteilig auf das Leistungspotential auswirken.
- Ablagerungen und Verzopfungen auf und in den Festbettpaketen schränken die besiedelbare Fläche und somit die Leistung des Biofilms ein.
- Die Säuberung der Festbetten ist nur mit erhöhtem Wartungsaufwand möglich.

In einem Forschungsbericht des Bundesministeriums für Forschung und Technologie, 02 WA 8538 vom Oktober 1987, wird über den Einsatz verwirbelbarer Schwebekörper zur Erhöhung der Leistungskapazität von Kläranlagen berichtet. Im Vergleich zu Festbettpaketen war die besiedelbare Oberfläche pro Beckenvolumen deutlich höher.

Nicht lösbare Probleme ergaben sich jedoch bei der Rückhaltung der Schwebekörper in der biologischen Stufe. Die Körper wurden teilweise durch den Rechen gedrückt. Außerdem verzopften die Körper so stark, daß sie auf den Boden absanken und sich ablagerten.

Die Verwendung von verwirbelbaren Aufwuchskörpern zur Erhöhung der Biomasse in Kläranlagen ist ebenfalls bekannt. Die Rückhaltung der Körper erfolgt durch Siebe oder Rechen.

Aufgrund des hohen Faser- und Schwebstoffanteils im kommunalen Abwasser, muß bei dieser Form der Rückhaltung nach kurzer Betriebszeit mit Verstopfungen, Verzopfungen und somit mit Havariesituationen gerechnet werden.

In WO-A-95 17351 ist ein belüfteter Behälter beschrieben, der ein verwirbelbares Bett aus partikelförmigem Trägermaterial enthält. Aus US-A-4,421,648 ist eine Vorrichtung und ein Verfahren zur biologischen Abwasserreinigung mit vertikal durchströmtem Nachklärbecken bekannt.

Durch die vorliegende Erfindung wird eine Kleinkläranlage vorgeschlagen, die die genannten Nachteile des Standes der Technik bei Anlagen dieser Größenordnung weitgehend beseitigt.

Die Rückhaltung der Aufwuchskörper in der belüfteten Biostufe erfolgt verstopfungsfrei nach folgende zwei Prinzipien:
- Variante 1:: Aufwuchskörper mit einem spezifischem Gewicht < 1,0 g/cm³:

In der belüfteten Stufe wird ein unten geschlossenes und oben offenes Rohr angebracht. Das Rohr endet ca. 30 cm unter der Wasseroberfläche. Der Durchmesser des Rohres hängt von der durchströmenden Wassermenge ab. In diesem Rohr wird ein zweites Rohr mit geringerem Durchmesser angeordnet das mit dem Ablauf verbunden ist. Das kleinere Rohr beginnt ca. 30 cm über dem Boden des größeren Rohres und endet über der Wasseroberfläche.

Durch diese Anordnung wird gewährleistet, daß die Aufwuchskörper mit einem spezifischem Gewicht unter 1,0 g/cm³ im großen Rohr stets wieder in das Wirbelbett aufschwimmen.

Belebtschlamm und gereinigtes Abwasser fließen über das innere Rohr in das Nachklärbecken.
- Variante 2:: Aufwuchskörper mit einem spezifischem Gewicht > 1,0 g/cm³:

Ein auf beiden Seiten offenes Rohr beginnt über der Wasseroberfläche und endet ca. 30 cm über dem Boden der Biostufe.

In das größere äußere Rohr wird von unten ein im Durchmesser kleineres Rohr eingeführt. Dieses Rohr beginnt unter der Wasseroberfläche und endet am Ablauf der Biostufe.

Durch diese Anordnung wird gewährleistet, daß die Aufwuchskörper mit einem spezifischem Gewicht über 1,0 g/cm³ stets wieder in das Wirbelbett zurückfallen. Belebtschlamm und gereinigtes Abwasser fließen über das innere Rohr in das Nachklärbecken.

Beide Rohre sind so dimensioniert, daß die Aufwuchskörper auch bei hohen hydraulischen Belastungen nicht aus der Biostufe ausgetragen werden können.

Der im Nachklärbecken abgetrennte Belebtschlamm wird teilweise in die Biostufe zurückgepumpt. Der im Überschuß produzierte Schlamm wird gemeinsam mit dem in der Vorklärung abgetrennten Primärschlamm in einem Schlammspeicher bis zur Entsorgung gestapelt.

Die wesentlichen Vorteile im Vergleich zum Stand der Technik sind:
- In der belüfteten Stufe der Kläranlage werden Aufwuchskörper eingesetzt, deren besiedelbare Oberfläche mit über 800 m²/m³ Schüttvolumen ein Mehrfaches höher als die von Festbettanlagen und bekannter Aufwuchskörper ist.
- Größe und Form der Körper sind so, daß Verzopfungen und Ablagerungen ausgeschlossen werden können.
- Der Biofilm auf den Körpern ist aufgrund des ständigen Abriebes im Wirbelbett dünn und somit physiologisch sehr aktiv.
- Die Versorgung der Mikroorganismen im Biofilm mit Sauerstoff und Nährsubstraten ist optimal. Faulprozesse können nicht auftreten. Der Einsatz der Körper ist wartungsfrei.
- Die in einer Schleimschicht auf den Körpern angewachsenen Organismen sind gegen länger anhaltende Unterbelastungen und zeitweiligen Sauerstoffmangel resistent.
- Die Körper haben ein einstellbares spezifisches Gewicht entweder < 1,0 g/cm³ oder > 1,0 g/cm³.
- Die Rückhaltung der Körper im durchflossenen Wirbelbett erfolgt ohne Verstopfungsgefahr.
- Ein Austrag der Körper ist auch bei hydraulischen Überlastungen kaum möglich.
- Die Reinigungsleistung ist bei hydraulischen Stößen und starken Frachtschwankungen stabil.
- Der Belebtschlamm wird in bekannter Weise in einem Nachklärbecken durch Sedimentation abgetrennt und teilweise in die Biostufe zurückgeführt. Durch die Kopplung beider Biologien kann die Biostufe höher belastet werden und es ist eine hohe Prozeßstabilität gegeben.
- Durch die Anordnung einer anoxischen Verfahrensstufe in der Biostufe wird Stickstoff über die biologischen Verfahrensschritte Nitrifikation/Denitrifikation weitergehend eliminiert.

Nachfolgend wird der Aufbau und die Wirkungsweise der Erfindung an einem Ausführungsbeispiel näher erläutert. Es zeigen:

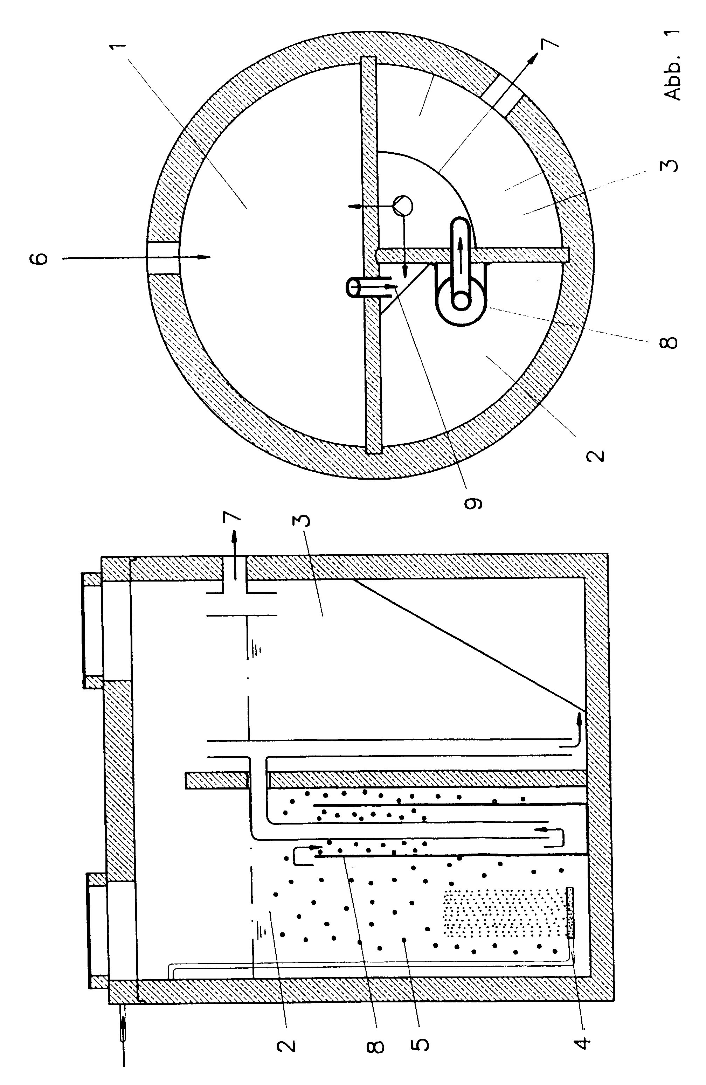

- Abb. 1: Kleinkläranlage mit Aufwuchskörpern mit einem spezifischem Gewicht < 1,0 g/cm³:

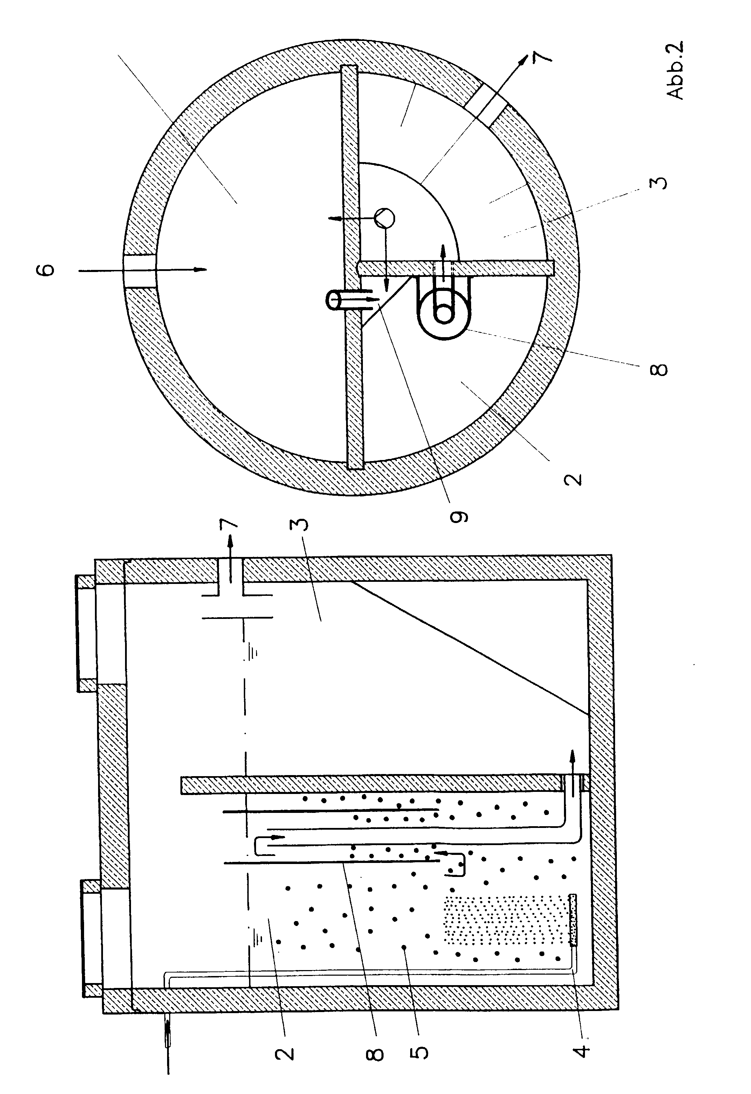

- Abb. 2: Kleinkläranlage mit Aufwuchskörpern mit einem spezifischem Gewicht > 1,0 g/cm³:

Die einzelnen Stufen der Kleinkläranlage sind vorzugsweise in einem dreisegmentigen Beton-Rundbecken angeordnet.

Das Rohabwasser fließt zunächst in das erste Segment, das als Vorklärbecken 1 und Schlammspeicher dient. In diesem Becken wird das Abwasser von Grob- und Schwimmstoffen sowie von Sand befreit.

Danach gelangt es gemeinsam mit dem aus der Nachkläreinrichtung 3 zurückgeführten Bioschlamm in eine teilweise mit Aufwuchskörpern 5 gefüllte und mit einer steuerbaren Belüftungseinrichtung 4 ausgerüstete biologische Stufe 2.

Die Aufwuchskörper 5 bilden bei Lufteintrag ein Wirbelbett und bei abgeschalteter Belüftung eine Schicht in der sich anoxische Milieubedingungen ausbilden.

Bei der Passage dieser Stufe werden vor allem die gelösten organischen Stoffe (BSB, CSB) aerob abgebaut und Stickstoff über die biologischen Stufen Nitrifikation und Denitrifikation teilweise eliminiert.

Die Aufwuchskörper 5 werden mit den darauf angesiedelten Organismen in der belüfteten Biostufe 2 durch das beschriebene System verstopfungsfrei zurückgehalten.

Die suspendierte Biomasse (Belebtschlamm) wird in einem vertikal durchströmten Nachklärbecken 3 mit abgeschrägten Wänden vom gereinigten Wasser getrennt. Ein Teil des sedimentierten Belebtschlammes wird ständig in die Biostufe 2 zurückgeführt. Der im Überschuß anfallende Bioschlamm wird diskontinuierlich in den Schlammspeicher 1 gepumpt.

Die bei der mechanischen Vorreinigung und der biologischen Reinigung anfallenden Schlämme werden im Schlammspeicher bis zur Entsorgung gestapelt und anaerob stabilisiert.

Die Biostufe 2 ist mit einer unbelüfteten, mit Aufwuchskörpern gefüllten Biofilterstufe 9 ausgerüstet, die als Denitrifikationsstufe dient. Dieser Stufe werden der aus der Nachklärung zurückgeführte Belebtschlamm und das aus der Vorklärung abfließende Abwasser zugeführt.

Das anoxisch vorbehandelte Abwasser gelangt nach Passage der Biofilterstufe 9 in den belüfteten Teil der Biostufe 2.

### Bezugszeichenaufstellung

- 1: Vorklärbecken mit Schlammspeicher
- 2: Biostufe
- 3: Nachklärbecken
- 4: Belüftungseinrichtung
- 5: Aufwuchskörper
- 6: Zulauf
- 7: Ablauf
- 8: Rückhaltevorrichtung
- 9: Biofilterstufe

## Patentansprüche

1. Biologische Kleinkläranlage, bei der einem Vorklärbecken mit Schlammspeicher (1) und einem Zulauf (6) eine Biostufe (2) für eine Belebtschlammbiologie und eine Biofilmbiologie mit einer abschaltbaren Belüftungseinrichtung (4) nachgeordnet ist, wobei die Biostufe (2) teilweise mit Aufwuchskörpern (5) mit einer besiedelbaren Oberfläche von mindestens 800 m² pro m³ Schüttvolumen gefüllt ist, in der sich zur Rückhaltung der Aufwuchskörper (5) eine Rückhaltevorrichtung (8) befindet und nach der ein vertikal durchströmbares Nachklärbecken (3) mit einem Ablauf (7) angeordnet ist, wobei die Anlagenteile (1 bis 4) vorzugsweise in Rundbecken angeordnet sind, dadurch gekennzeichnet, daß sich in der Biostufe (2) zusätzlich eine unbelüftete, mit Aufwuchskörpern gefüllte Biofilterstufe (9) befindet, in die der Zulauf aus dem Vorklärbecken (1) und der Zulauf für Rücklaufschlamm aus dem Nachklärbecken (3) mündet.

2. Biologische Kleinkläranlage nach Anspruch 1, dadurch gekennzeichnet, daß das spezifische Gewicht der Aufwuchskörper < 1,0 g/cm³, vorzugsweise 0,9 g/cm³, beträgt, wobei sich die beiden Zuläufe aus dem Vorklärbecken (1) und aus dem Nachklärbecken (3) im oberen Bereich der Biofilterstufe (9) befinden, die Biofilterstufe (9) zur Biostufe (2) hin unten offen ist und über den Wasserspiegel hinausragt und daß das Rohr der Rückhaltevorrichtung (8) vom Boden der Biostufe (2) bis unterhalb des Wasserspiegels reicht.

3. Biologische Kleinkläranlage nach Anspruch 1, dadurch gekennzeichnet, daß das spezifische Gewicht der Aufwuchskörper > 1,0 g/cm³, vorzugsweise 1,1 g/cm³, beträgt, wobei sich die beiden Zuläufe aus dem Vorklärbecken (1) und aus dem Nachklärbecken (3) im unteren Bereich der Biofilterstufe (9) befinden, die Biofilterstufe (9) zur Biostufe (2) hin unten geschlossen ist und oben mit dem Wasserspiegel abschließt und daß das Rohr der Rückhaltevorrichtung (8) von oberhalb des Bodens der Biostufe (2) bis oberhalb des Wasserspiegels reicht.

## Claims

1. Small-scale biological sewage treatment plant in which a biostage (2) for activated-sludge biology and biofilm biology equipped with an aeration device (4) which can be turned off is arranged downstream of a preliminary sedimentation tank equipped with a sludge reservoir (1) and a feed (6), the biostage (2) being partially filled with growth bodies (5) having a colonizable surface area of at least 800 m² per m³ bed volume and in which to retain the growth bodies (5) a retention apparatus (8) is situated and downstream of which is disposed a secondary sedimentation tank (3) through which flow can pass vertically and which has an outlet (7) the plant components (1 to 4) preferably being disposed in round tanks, characterized in that in the biostage (2) there is additionally situated a non-aerated growth-body-filled biofilter stage (9) into which open the feed from the preliminary sedimentation tank (1) and the feed for return sludge from the secondary sedimentation tank (3).

2. Small-scale biological sewage treatment plant according to Claim 1, characterized in that the specific gravity of the growth bodies is < 1.0 g/cm³, preferably 0.9 g/cm³, the two feeds from the preliminary sedimentation tank (1) and from the secondary sedimentation tank (3) being situated in the upper region of the biofilter stage (9), the biofilter stage (9) being open at the bottom towards the biostage (2) and projecting above the water level and in that the tube of the retention apparatus (8) extends from the bottom of the biostage (2) to below the water level.

3. Small-scale biological sewage treatment plant according to Claim 1, characterized in that the specific gravity of the growth bodies is > 1.0 g/cm³, preferably 1.1 g/cm³, the two feeds from the preliminary sedimentation tank (1) and from the secondary sedimentation tank (3) being situated in the lower region of the biofilter stage (9), the biofilter stage (9) being closed at the bottom to the biostage (2) and terminating at the top with the water level and in that the tube of the retention apparatus (8) extends from above the bottom of the biostage (2) to above the water level.

## Revendications

1. Installation de clarification biologique de petite taille, dans laquelle un étage biologique (2) pour un traitement biologique à boue activée et à biofilm, doté d'un dispositif d'aération (4) déconnectable, est monté en aval d'un décanteur primaire pourvu d'une arrivée (6) et d'un réservoir de boue (1), l'étage biologique (2) étant partiellement rempli de corps de croissance (5) possédant une surface colonisable d'au moins 800 m² par m³ de volume apparent, dans lequel se trouve un dispositif de rétention (8) pour retenir les corps de croissance (5), et étant suivi d'un décanteur final (3) pouvant être traversé verticalement par le flux et pourvu d'une évacuation (7), les parties (1 à 4) de l'installation étant disposées de préférence dans un bassin circulaire, caractérisée en ce qu'un étage de filtration biologique (9), non aéré et rempli de corps de croissance, se trouve en plus dans l'étage biologique (2), l'arrivée provenant du décanteur primaire (1) et l'arrivée pour la boue de retour provenant du décanteur final (3) débouchant dans l'étage de filtration biologique (9).

2. Installation de clarification biologique de petite taille selon la revendication 1, caractérisée en ce que le poids spécifique des corps de croissance est inférieur à 1,0 g/cm³, de préférence égal à 0,9 g/cm³, les deux arrivées, en provenance du décanteur primaire (1) et du décanteur final (3), se trouvant dans la région supérieure de l'étage de filtration biologique (9), et l'étage de filtration biologique (9) étant ouvert en bas vers l'étage biologique (2) et dépassant de la surface de l'eau, et en ce que le tuyau du dispositif de rétention (8) s'étend depuis le fond de l'étage biologique (2) jusqu'en dessous de la surface de l'eau.

3. Installation de clarification biologique de petite taille selon la revendication 1, caractérisée en ce que le poids spécifique des corps de croissance est supérieur à 1,0 g/cm³, de préférence égal à 1,1 g/cm³, les deux arrivées, en provenance du décanteur primaire (1) et du décanteur final (3), se trouvant dans la région inférieure de l'étage de filtration biologique (9), et l'étage de filtration biologique (9) étant fermé en bas vers l'étage biologique (2) et se terminant en haut à la surface de l'eau, et en ce que le tuyau du dispositif de rétention (8) s'étend depuis au-dessus du fond de l'étage biologique (2) jusqu'au-dessus de la surface de l'eau.
